# EUROPEAN PATENT SPECIFICATION

(11) **EP 1 095 810 B1**
(45) Date of publication and mention of the grant of the patent: **29.11.2006**
(21) Application number: 00119712.8
(22) Date of filing: 09.09.2000
(51) Int. Cl.: B60K 28/16, B60K 23/08

(54) **A vehicle traction arrangement**
Anordnung zur Traktionsverbesserung bei Kraftfahrzeugen
Dispositif de régulation du glissement de traction des roues motrices d'un véhicule

(30) Priority: 30.10.1999 GB 9925777
(43) Date of publication of application: 02.05.2001
(73) Proprietor: Bayerische Motoren Werke Aktiengesellschaft, 80809 München (DE)
(72) Inventor: Ranson, Martin, Ernsford Grange, Coventry CV3 2HF (GB)

(56) References cited:
- DE-A- 3 912 349
- US-A- 4 391 340

## Description

The present invention relates to a vehicle traction arrangement and more particularly to such an arrangement used with regard to a vehicle which is to traverse relatively soft or sandy terrain.

A vehicle traction arrangement comprising a controller to control torque distribution between the front and rear wheels is generally known for example by the German Patent Application DE 39 12 349 A1.

It is well known in order to maintain motion of a vehicle across soft or sandy terrain that it is necessary to maintain momentum otherwise the vehicle wheels will become embedded in the terrain and so will find it impossible to overcome the increasingly steep incline created by the wheel depression particularly as the shear contact between the wheel and the surface is so weak. Thus, it is known when driving off-road and in particular when traversing sand-type terrain, that the forward momentum of the vehicle should be maintained by using as high a speed as possible. Such an approach is necessary due to the nature of the terrain, if the vehicle for any reason loses momentum the wheels of the vehicle will quickly start to sink into the soft terrain and the subsequent increase in resistance to motion causes the vehicle to slow further until such time as the vehicle can no longer provide enough power to overcome the external resistances and the vehicle then stops. In such circumstances, providing further torque to the wheels of the vehicle will simply cause those wheels to spin further embedding them in the soft terrain.

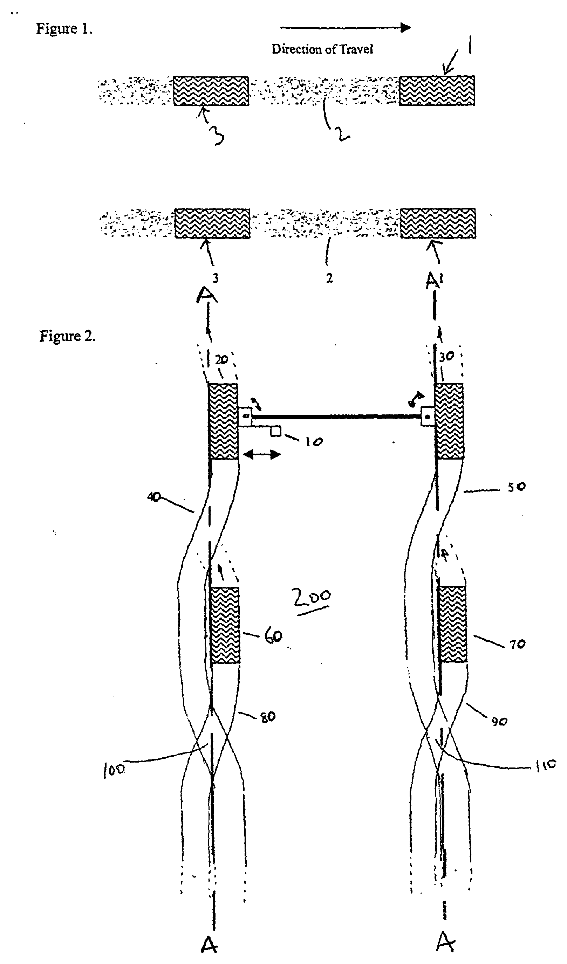

Figure 1 illustrates the drive paths of vehicle wheels travelling in a forward direction. It will be seen, the front wheel 1 of a vehicle create a depression in the terrain surface 2 as a result of the forward pressure exerted by that wheel 1. If the vehicle is driven in a straight line, and assuming that the vehicle has a similar distance between front wheels and rear wheels across an axle, the rear wheels 3 will follow in the depression made by the front wheels 1. Thus, the rear wheels 3 will have a greater surface area in contact with the terrain and so for an equal torque split between the front wheels 1 and the rear wheels 3 of the vehicle the rear wheels 3 will tend to slow.

These problems of uneven action between the front wheels 1 and the rear wheels 3 will be exaggerated if the vehicle has an unequal axle weight distribution.

It is the vehicle configuration whereby the rear wheels 3 follow in the depression of the front wheels 1 which produces the problems described above. Thus, it is an objective of the present invention to provide a vehicle traction arrangement which substantially relieves these problems.

In accordance with the present invention there is provided a vehicle traction arrangement comprising a controller arranged to control torque distribution for traction to independently driven wheels of a vehicle and with each of said independently driven wheels arranged in respective drive wheel pairs such that one wheel is in front of the other when driven in a drive direction, the controller being arranged to apply torque to each wheel for each drive wheel pair whereby those wheels are alternately driven either side of a nominal line defining the drive direction and so that a drive path of each wheel of each drive wheel pair, other than at cross-over section, does not fully coincide with the other to improve traction performance for that drive pair upon soft terrain.

Also in accordance with the present invention there is provided a vehicle traction arrangement comprising a controller arranged to control steering of wheels of a vehicle and with each of said wheels arranged in respective wheel pairs such that one wheel is in front of the other when moved in a drive direction, the controller being arranged to apply a steering angle to each wheel of each said wheel pair whereby those wheels are alternatively moved either side of a nominal line defining the drive direction and so that a drive path of each wheel pair, other than at cross-over sections, does nor coincide with the other to improve traction for that wheel pair upon soft terrain.

Preferably, the drive paths of each respective wheel of each drive wheel pair do not coincide completely and therefore do not overlap with each other.

Normally, each drive wheel pair will be arranged such that one wheel is directly in front of the other and so without the controller distributing torque in accordance with the present invention the drive paths of each of these wheels will substantially coincide.

Typically, there will be two drive wheel pairs in a vehicle traction arrangement.

Each drive wheel pair may comprise 3 or more wheels in notional alignment.

The controller may be associated with suitable sensor means in order to determine soft terrain and/or be associated with a manual switch device in order to select controller operation in accordance with the present invention.

Typically, each drive path will be defined by the width of its independently driven wheel and the controller will be arranged such that the drive path of these independently driven wheels will alternate at least for at least a full wheel width either side of the nominal line defining the drive direction.

Embodiments of the present invention will now be described by way of example only with reference to the accompanying drawings in which:-
Figure 1 is a schematic illustration depicting normal drive path footprints for a typical vehicle; and,
Figure 2 is a schematic illustration depicting drive paths for a present vehicle traction arrangement.

Figure 1 illustrates a conventional drive path footprint. Thus, the front wheels 1 create a depression or furrow 2. Rear wheels 3 then move along that depression or furrow 2 in a straight line behind the front wheels 1. In such circumstances, the respective front wheels 1 and rear wheels 3 can be considered as respective drive wheel pairs.

The rear wheels 3 of each drive wheel pair can be provided with greater torque through a controller (not shown) in order to overcome the additional resistances to motion as a result of greater surface engagement in the furrow 2 along with the probably increased but looser nature of the surface through which the rear wheels 3 must pass.

It will be understood that the front wheels 1 will generally "break through" the upper crust of a soft or sandy surface to expose the potentially less compact surface in the depression or furrow 2 which must be overcome by the rear wheels 3. Clearly, the front wheels 1 will sink under their own weight into a sandy or soft terrain surface and so potentially compact that surface. However, upon rotation of the front wheels 1, it will be understood that the effect will be to churn and throw up from that compacted surface as a looser and more shifting surface which must be overcome by the rear wheels 3. The rear wheels 3 require additional torque in order to overcome these greater resistances in motion over the surface through the depressions or furrows 2.

Figure 2 illustrates an embodiment of the present invention as a schematic illustration of the drive path footprint of a vehicle. Thus, a steering actuator 10 is arranged to induce small displacements in the steered front wheels 20, 30. In such circumstances, as a vehicle progresses across relatively soft terrain the front steerable wheels 20, 30 will cause respective drive paths as the depressions 40, 50 but by applying small displacements in these steered front wheels 20, 30 the rear wheels 60 ,70 will follow a different path 80, 90 to that defined for the front steerable wheels 20, 30 except at cross-over sections 100, 110. In such circumstances, it will be appreciated that the respective front wheels 20, 30 and rear wheels 60, 70, except at cross-over sections 100, 110, will each engage respectively different portions of a terrain surface 200 over which the vehicle is driven. Thus, it will be understood that the resistance of the terrain surface presented to each respective wheel 20, 30, 60, 70 will be substantially the same so that there will be reduced relative sinking between the front axle of the vehicle and the rear axle of a vehicle.

As described previously, the respective front wheels 20, 30 and rear wheels 60, 70 can be considered as distinct and respective drive wheel pairs 20, 60 and 30, 70. Thus, it will be understood that the respective drive paths 40, 80 and 50, 90 are arranged so that they do not coincide and alternate about a respective nominal line A-A defining the drive direction of the vehicle.

It will be appreciated as an alternative to the embodiment described above with the steering actuator 10 located with regard to the front axle wheels 20, 30 it would be possible, within the bounds of stability, to provide an additional or sole steering actuator associated with the rear axle wheels 60, 70 in order to define the respective drive paths 40, 50 and 80, 90 of the wheels 20, 30, 60, 70.

Generally, the wheels 20, 30, 60, 70 will be independently driven by the controller of the vehicle (not shown). Thus, each wheel 20, 30, 60, 70 will be individually controlled with regard to the torque applied and its speed of rotation regulated. In such circumstances, by manipulating the torque split between the wheels 20, 30, 60, 70 it will be understood that specific steering of each wheel 20, 30, 60, 70 will be emulated i.e., relative drag across an axle by difference in torque and speed of rotation will tend to turn or steer the wheels of that axle towards the side of the lower wheel. Thus, by alternating the torque and speed of rotation of respective wheels and in particular the front wheels 20, 30 it will be understood that the drive paths 40, 50, 80, 90 can be created to provide the improved traction response over soft terrain as provided by the present invention.

It will also be understood that through this torque distribution bias from one side of the vehicle to the other that the vehicle will "tack" across the terrain 200 without any change in the steering angle of the wheels 20, 30, 60, 70 with improved overall stability for the vehicle. Furthermore, the inherent act of turning wheels 20, 30 or 60, 70 using a steering actuator in itself can create a depression with varying resistance to motion as described previously.

It will be understood that the alternating nature of the respective drive paths 40, 50, 80, 90 about the notional line A-A of the direction of travel can be configured such that the frequency and respective amplitude of displacement relative to the line A-A can be determined by the controller dependent upon vehicle speed, the distance between their respective front axle and rear axle along with the terrain surface 200 over which the vehicle is driven.

Clearly, by the controller manipulating the actuator 10 along with the torque distribution between the wheels 20, 30, 60, 70 it will be possible to optimise the respective drive paths 40, 50, 80, 90 to ensure the rear wheels 60, 70 spend the minimum proportionate time within the depressions or furrows created by the drive paths 40, 50 of the front wheels 20, 30. In such circumstances, the maximum traction should be provided for the vehicle. However, it will also be understood that the minimum time or distance for the rear wheels 60, 70 in the depression or furrow created by the front wheels 20, 30 drive path 40, 50 will normally be through an abrupt cross-over 100, 110 but such abrupt cross-overs 100, 110 will generally require more severe steering of the wheels 20, 30, 60, 70 which in itself may create problems with regard to traction and stability.

It will be understood that several vehicles in accordance with the present invention could be arranged in an in-line convoy with respective controllers in each vehicle communicating with one another in order to ensure the most appropriate drive path for each wheel in each vehicle is chosen to maximise traction over a soft terrain surface 200. Typically, each vehicle will describe its own pathway over the terrain surface 200.

As can be seen in Figure 2 generally the drive path for each wheel 20, 30, 60, 70 is substantially the width of that wheel 20, 30, 60, 70. Thus, as also seen in Figure 2 generally the present traction arrangement through the controller will ensure each drive path 40, 50, 80, 90 is arranged to alternate substantially fully either side of the nominal line A-A indicative of the drive direction. However, it will also be understood that complete avoidance of the respective drive paths 40, 80, and 50, 90 is not possible as there will be cross-over areas 100, 110. Furthermore, where possible it will also be understood that the drive paths of the respective wheels may overlap to a degree but not coincide in accordance with the present invention such that an effective vehicle drive path constituted by all the wheels of the vehicle is significantly broader than individual wheels so that there is greater weight distribution over that wider drive path in order to improve traction upon soft and sandy terrain surfaces. Despite the above, it will be appreciated that it is preferred that the drive paths of the wheels of a vehicle should not substantially overlap other than during cross-over in order to maximise the traction benefits of the present arrangement.

It will be understood that generally a vehicle will comprise two axles and so there will be two drive wheel pairs comprising a front wheel and a rear wheel operated in accordance with the present vehicle traction arrangement.

It will be appreciated that for the purpose of the present invention a drive wheel pair may comprise three or more wheels arranged in substantial alignment and with each wheel being steered by a steering actuator or through torque distribution in order to follow distinct drive paths which do not coincide for better traction upon soft terrain surfaces.

Clearly, the present arrangement may include means to monitor the terrain surface upon which the vehicle and therefore the wheels of that vehicle are driven. Thus, the controller of the present vehicle traction arrangement upon detecting a terrain surface which has a soft or sandy form will be arranged to provide the necessary steering through an actuator 10 or torque distribution in order to ensure the drive paths of each wheel in a drive wheel pair do not substantially coincide in accordance with the present invention. Alternatively, or as an override feature, the controller may be coupled to a switch to enable manual initialisation of the controller in order to provide steering of the wheels through a steering actuator and/or torque bias to ensure that the drive paths of the wheels of the vehicle do not substantially coincide in accordance with the present invention.

As indicated above the amplitude in terms of the oscillation either side of the nominal A-A of drive direction can be determined dependent upon the terrain surface for best traction. Similarly, the frequency of alternating either side of that nominal line A-A will also be determined in order to achieve the desired traction performance. However, it will be understood and as illustrated in Figure 2 that generally each wheel of a vehicle will be arranged in order to have at least a period of straight in-lying travel during each alternate oscillation either side of the nominal line A-A in order to limit the cross-over drag effect upon the wheels of the vehicle.

## Claims

1. A vehicle traction arrangement comprising a controller arranged to control torque distribution to independently driven wheels (20,30,60,70) of a vehicle and with each of said independently driven wheels arranged in respective drive pairs (20,60;30,70) such that one wheel is in front of the other when driven in a drive direction, the controller being arranged to apply torque to each wheel of each drive wheel pair whereby those wheels are alternatively driven either side of a nominal line (A-A) defining the drive direction and so that a drive path (40,80 ; 50,90) of each wheel of each drive wheel pair, other than at cross-over sections (100,110), does not coincide with the other to improve traction performance for that drive pair upon soft terrain.

2. A vehicle traction arrangement comprising a controller arranged to control steering of wheels of a vehicle and with each of said wheels (20,30,60,70) arranged in respective wheel pairs (20,60 ; 30,70) such that one wheel is in front of the other when moved in a drive direction, the controller being arranged to apply a steering angle to each wheel of each said wheel pair whereby those wheels are alternatively moved either side of a nominal line (A-A) defining the drive direction and so that a drive path (40,80 ; 50,90) of each wheel pair, other than at cross-over sections (100,110), does nor coincide with the other to improve traction for that wheel pair upon soft terrain.

3. An arrangement as claimed in claim 1 or claim 2 wherein the drive path of each wheel do not coincide at all except at cross-over sections (100,110) and so do not overlap.

4. An arrangement as claimed in claim 1, 2 or 3 wherein each wheel pair (20,60 ; 30,70) comprises a front wheel (20,30) and a rear wheel (60,70) arranged such that normally the front wheel is directly in front of the rear wheel.

5. An arrangement as claimed in any preceding claim wherein the vehicle traction arrangement includes two wheel pairs (20,60 ; 30,70) arranged with respective wheels at opposite ends of axles of a vehicle.

6. An arrangement as claimed in any preceding claim wherein a wheel pair comprises three or more respective wheels substantially in alignment.

7. An arrangement as claimed in any preceding claim wherein the controller includes a sensor and monitor means in order to determine a soft terrain surface (200) and so configure the respective wheel pairs in order to ensure each drive path (40,80 ; 50,90) of each wheel of each wheel pair do not coincide other than at cross-over sections (100,110).

8. An arrangement as claimed in any preceding claim wherein the controller incorporates a manual switch in order to initiate that controller to configure each wheel of each wheel pair such that each drive path does not coincide with the other within a wheel pair.

9. A vehicle traction arrangement as claimed in any preceding claim wherein each wheel of a wheel pair is arranged to alternate either side of the nominal line defining the drive direction by at least a full wheel width either side of that nominal line.

10. A method of operating a vehicle traction arrangement including wheels arranged in respective wheel pairs wherein:-
a. each wheel (20,30,60,70) is configured to follow the drive paths (40,50,80,90) using steering means;
b. each drive path alternates either side of a nominal line (A-A) defining the drive direction of a vehicle;
c. within a wheel pair (20,60 ; 30,70) each drive path alternating either side of a nominal line (A-A) defining the drive direction is arranged such that these drive paths within a respective wheel pair do not substantially coincide in order to improve traction performance for that wheel pair upon soft terrain.

11. A method as claimed in claim 11 wherein the controller initiates a steering actuator in order to steer each respective wheel in a wheel pair along its drive path.

12. A method as claimed in claim 11 wherein each wheel is provided with a distinct relative torque compared to other wheels within a vehicle in order to steer that wheel along its drive path.

## Patentansprüche

1. Fahrzeugantriebsanordnung, die einen Regler umfaßt, der vorgesehen ist, um die Drehmomentverteilung auf unabhängig angetriebene Räder (20, 30, 60, 70) eines Fahrzeugs zu regeln, wobei jedes der unabhängig angetriebenen Räder in jeweiligen Antriebspaaren (20, 60; 30, 70) vorgesehen ist, so daß sich bei einem Antrieb in einer Fahrtrichtung ein Rad vor dem anderen befindet, wobei der Regler vorgesehen ist, um Drehmoment auf jedes Rad eines jeden Antriebsradpaars auszuüben, so daß diese Räder auf jeder Seite einer die Fahrtrichtung definierenden Nominallinie (A-A) abwechselnd angetrieben werden und daß eine Fahrspur (40, 80; 50, 90) eines jeden Rads eines jeden Antriebsradpaars, außer in Überschneidungsbereichen (100, 110), nicht mit der anderen übereinstimmt, um die Antriebsleistung für dieses Antriebspaar auf weichem Gelände zu verbessern.

2. Fahrzeugantriebsanordnung, die einen Regler umfaßt, der vorgesehen ist, um das Lenken von Rädern eines Fahrzeugs zu regeln, wobei jedes der Räder (20, 30, 60, 70) in jeweiligen Radpaaren (20, 60; 30, 70) vorgesehen ist, so daß sich bei einer Bewegung in einer Fahrtrichtung ein Rad vor dem anderen befindet, wobei der Regler vorgesehen ist, um einen Lenkwinkel für jedes Rad eines jeden Radpaars vorzugeben, so daß diese Räder auf jeder Seite einer die Fahrtrichtung definierenden Nominallinie (A-A) abwechselnd bewegt werden und daß eine Fahrspur (40, 80; 50, 90) eines jeden Radpaars, außer in Überschneidungsbereichen (100, 110), nicht mit der anderen übereinstimmt, um den Antrieb für dieses Radpaar auf weichem Gelände zu verbessern.

3. Anordnung nach Anspruch 1 oder Anspruch 2, bei der die Fahrspuren eines jeden Rads, außer in Überschneidungsbereichen (100, 110), überhaupt nicht übereinstimmen und sich daher nicht überlagern.

4. Anordnung nach Anspruch 1, 2 oder 3, bei der jedes Radpaar (20, 60; 30, 70) ein Vorderrad (20, 30) und ein Hinterrad (60, 70) umfaßt, die so vorgesehen sind, daß sich normalerweise das Vorderrad direkt vor dem Hinterrad befindet.

5. Anordnung nach einem der vorstehend aufgeführten Ansprüche, wobei die Fahrzeugantriebsanordnung zwei Radpaare (20, 60; 30, 70) beinhaltet, die mit jeweiligen Rädern an gegenüberliegenden Enden von Achsen eines Fahrzeugs vorgesehen sind.

6. Anordnung nach einem der vorstehend aufgeführten Ansprüche, bei der ein Radpaar drei oder mehr jeweilige Räder, die im wesentlichen zueinander ausgerichtet sind, umfaßt.

7. Anordnung nach einem der vorstehend aufgeführten Ansprüche, bei der der Regler ein Sensor- und Überwachungsmittel beinhaltet, um eine weiche Geländeoberfläche (200) zu bestimmen und so die jeweiligen Radpaare zu konfigurieren, um sicherzustellen, daß jede Fahrspur (40, 80; 50, 90) eines jeden Rads eines jeden Radpaars, außer in Überschneidungsbereichen (100, 110), nicht übereinstimmt.

8. Anordnung nach einem der vorstehend aufgeführten Ansprüche, bei der der Regler einen manuellen Schalter beinhaltet, mit dem dieser Regler in Gang gesetzt werden kann, um jedes Rad eines jeden Radpaars zu konfigurieren, so daß jede Fahrspur mit der anderen innerhalb eines Radpaars nicht übereinstimmt.

9. Fahrzeugantriebsanordnung nach einem der vorstehend aufgeführten Ansprüche, bei der jedes Rad eines Radpaars so vorgesehen ist, daß es auf jeder Seite der die Fahrtrichtung definierenden Nominallinie, versetzt um mindestens eine volle Radbreite auf jeder Seite dieser Nominallinie, abwechselnd angetrieben wird.

10. Verfahren zum Betreiben einer Fahrzeugantriebsanordnung, die in jeweiligen Radpaaren vorgesehene Räder beinhaltet, wobei:
a. jedes Rad (20, 30, 60, 70) so konfiguriert ist, daß es unter Verwendung von Lenkmitteln den Fahrspuren (40, 50, 80, 90) folgt;
b. jede Fahrspur auf jeder Seite einer die Fahrtrichtung eines Fahrzeugs definierenden Nominallinie (A-A) abwechselnd verläuft;
c. innerhalb eines Radpaars (20, 60; 30, 70) jede auf jeder Seite einer die Fahrtrichtung definierenden Nominallinie (A-A) abwechselnd verlaufende Fahrspur so vorgesehen ist, daß diese Fahrspuren innerhalb eines jeweiligen Radpaars im wesentlichen nicht übereinstimmen, um so die Antriebsleistung für dieses Radpaar auf weichem Gelände zu verbessern.

11. Verfahren nach Anspruch 10, bei dem der Regler einen Lenkbetätiger in Gang setzt, um jedes jeweilige Rad in einem Radpaar entlang seiner Fahrspur zu lenken.

12. Verfahren nach Anspruch 10, bei dem jedes Rad, verglichen mit anderen Rädern innerhalb eines Fahrzeugs, mit einem gesonderten relativen Drehmoment vorgesehen ist, um dieses Rad entlang seiner Fahrspur zu lenken.

## Revendications

1. Dispositif de traction d'un véhicule,
**caractérisé en ce qu'**
il comprend :
un contrôleur disposé pour commander la distribution de couple de traction aux roues entraînées indépendamment (20, 30, 60, 70) d'un véhicule, chacune de ces roues entraînées indépendamment étant disposées en paires de roues motrices respectives (20, 60 ; 30, 70) de façon qu'une roue soit située en face de l'autre lorsqu'elles sont entraînées dans une direction de conduite, le contrôleur étant disposé pour appliquer un couple à chaque roue de chaque paire de roues motrices, de façon que ces roues soient conduites alternativement de part et d'autre d'une ligne nominale (A-A) définissant la direction de conduite, et de façon que le chemin de passage (40, 80 ; 50, 90) de chaque roue de chaque paire de roues motrices, ailleurs que dans les sections de croisement (100, 110), ne coïncide pas avec l'autre, pour améliorer ainsi les performances de traction de cette paire de roues motrices sur un terrain mou.

2. Dispositif de traction d'un véhicule,
**caractérisé en ce qu'**
il comprend :
un contrôleur disposé pour commander la direction des roues d'un véhicule, et chacune des roues (20, 30 ; 60, 70) étant disposées en paires de roues motrices respectives (20, 60 ; 30, 70) de façon qu'une roue soit située en face de l'autre lorsqu'elles sont déplacées dans une direction de conduite, le contrôleur étant disposé pour appliquer un angle de direction à chaque roue de chaque paire de roues, de façon que ces roues soient déplacées alternativement de part et d'autre d'une ligne nominale (A-A) définissant la direction de conduite, et de façon que le chemin de passage (40, 80 ; 50, 90) de chaque paire de roues, ailleurs que dans les sections de croisement (100, 110), ne coïncide pas avec l'autre, pour améliorer ainsi la traction de cette paire de roues sur un terrain mou.

3. Dispositif selon l'une quelconque des revendications 1 ou 2,
dans lequel,
les chemins de passage de chacune des roues ne coïncident pas du tout, sauf dans les sections de croisement (100, 110), de sorte qu'ils ne se recouvrent pas.

4. Dispositif selon l'une quelconque des revendications 1, 2 ou 3,
dans lequel,
chaque paire de roues (20, 60 ; 30, 70) comprend une roue avant (20, 30) et une roue arrière (60, 70) disposées de façon que, normalement, la roue avant soit directement en face de la roue arrière.

5. Dispositif selon l'une quelconque des revendications précédentes
dans lequel,
le dispositif de traction du véhicule comprend deux paires de roues (20, 60 ; 30, 70) disposées de façon que les roues respectives soient placées aux extrémités opposées des essieux du véhicule.

6. Dispositif selon l'une quelconque des revendications précédentes
dans lequel,
une paire de roues comprend trois roues respectives ou plus, essentiellement en alignement.

7. Dispositif selon l'une quelconque des revendications précédentes
dans lequel,
le contrôleur comprend un détecteur et des moyens de moniteur pour déterminer une surface de terrain mou (200) et pour configurer ainsi les paires de roues respectives de manière à s'assurer que les chemins de passage (40, 80 ; 50, 90) de chaque roue de chaque paire de roues, ne coïncident pas, ailleurs que dans les sections de croisement (100, 110).

8. Dispositif selon l'une quelconque des revendications précédentes
dans lequel,
le contrôleur incorpore un commutateur manuel pour amener ce contrôleur à configurer chaque roue de chaque paire de roues de façon que chaque chemin de passage ne coïncide pas avec l'autre à l'intérieur d'une paire de roues.

9. Dispositif de traction d'un véhicule selon l'une quelconque des revendications précédentes
dans lequel,
chaque roue d'une paire de roues est disposée pour passer alternativement de part et d'autre de la ligne nominale définissant la direction de conduite, avec une amplitude d'au moins une pleine largeur de roue de part et d'autre de cette ligne nominale.

10. Procédé pour faire fonctionner un dispositif de traction de véhicule incluant des roues disposées en paires de roues respectives,
dans lequel,
a. chaque roue (20, 30 ; 60, 70) est configurée pour suivre les chemins de passage (40, 50; 80, 90) en utilisant des moyens de direction,
b. chaque chemin de passage passe alternativement de part et d'autre d'une ligne nominale (A-A) définissant la direction de conduite du véhicule,
c. à l'intérieur d'une paire de roues (20, 60 ; 30, 70), chaque chemin de passage passant alternativement de part et d'autres d'une ligne nominale (A-A) définissant la direction de conduite, est disposé de façon que ces chemins de passage à l'intérieur d'une paire de roues respectives, ne coïncident essentiellement pas, pour améliorer ainsi les performances de traction de cette paire de roues sur un terrain mou.

11. Procédé selon la revendication 10,
dans lequel,
le contrôleur déclenche un actionneur de direction pour diriger chaque roue respective d'une paire de roues le long de son chemin de conduite.

12. Procédé selon la revendication 11,
dans lequel,
chaque roue est munie d'un couple relatif distinct comparativement aux autres roues, à l'intérieur d'un véhicule, pour diriger ainsi cette roue le long de son chemin de conduite.
